# EUROPÄISCHE PATENTANMELDUNG

(11) **EP 1 715 222 A1**
(43) Veröffentlichungstag der Anmeldung: **25.10.2006**
(21) Anmeldenummer: 05008632.1
(22) Anmeldetag: 20.04.2005
(51) Int. Cl.: F16J 15/32, F16J 15/56

(54) **Reibungsarme Dichtung**

(71) Anmelder: Carl Freudenberg KG, 69469 Weinheim (DE)
(72) Erfinder: Freitag, Edgar, 34613 Schwalmstadt (DE); Sigrist, Uwe, 34633 Ottrau (DE)

(57) **Zusammenfassung**

Eine Dichtung mit einem Gleitelement (1) und einem Anpresselement (2), wobei das Gleitelement (1) eine innere (3) und eine äußere Wirkfläche (4) aufweist, wobei das Gleitelement (1) das Anpresselement (2) umfänglich umgibt, wobei das Anpresselement (2) an die innere Wirkfläche (3) des Gleitelements (1) kraftbeaufschlagt anpressbar ist und wobei die äußere Wirkfläche (4) des Gleitelements (1) einer relativ zur Dichtung beweglichen Lauffläche (5) zuordenbar ist, ist im Hinblick auf die Aufgabe, ein System relativ zueinander beweglicher Körper bei optimaler Schmierung zuverlässig zu dichten, dadurch gekennzeichnet, dass die äußere Wirkfläche (4) derart ballig ausgeformt ist, dass sie während der relativen Bewegung der Lauffläche ausschließlich über ein Fluidum mit dieser in Wirkverbindung steht.

## Beschreibung

### Technisches Gebiet

Die Erfindung betrifft eine Dichtung mit einem Gleitelement und einem Anpresselement, wobei das Gleitelement eine innere und eine äußere Wirkfläche aufweist, wobei das Gleitelement das Anpresselement umfänglich umgibt, wobei das Anpresselement an die innere Wirkfläche des Gleitelements kraftbeaufschlagt anpressbar ist und wobei die äußere Wirkfläche des Gleitelements einer relativ zur Dichtung beweglichen Lauffläche zuordenbar ist.

### Stand der Technik

Derartige Dichtungen sind aus dem Stand der Technik bereits bekannt. Die bekannten Dichtungen finden Verwendung als Kolbendichtung oder Stangendichtung und dienen der Abdichtung zweier fluidgefüllter Räume, in denen sich ein Kolben oder eine Stange bewegt. Die bekannten Dichtungen unterliegen einer erheblichen Abnutzung, da das Gleitelement an der Lauffläche einer starken Reibung unterworfen wird.

Zwar sind bereits verschiedene geometrische Ausgestattungen des Gleitelements bekannt, welche dessen Schmierung beim Gleiten an der Lauffläche gewährleisten sollen, jedoch ist diese Schmierung oft unzureichend.

So ist beispielsweise eine Schmierung bei geringen Geschwindigkeiten der Lauffläche relativ zum Gleitelement nicht immer sichergestellt. Insbesondere ist bekannt, dass Kolben zu einer "stick-stip"-Bewegung neigen. Hierbei führt der Kolben ruckartige Bewegungen aus, welche sich dadurch ergeben, dass an der Lauffläche zum Teil ungeschmierte Bereiche auftreten, an denen das Gleitelement haftet.

Die aus dem Stand der Technik bekannten Dichtungen ermöglichen eine nur wenig zufrieden stellende Schmierung kritischer Stellen in einem System relativ zueinander beweglicher Körper.

### Darstellung der Erfindung

Der Erfindung liegt daher die Aufgabe zugrunde, ein System relativ zueinander beweglicher Körper bei optimaler Schmierung zuverlässig zu dichten.

Die vorliegende Erfindung löst die zuvor genannte Aufgabe durch die Merkmale des Patentanspruchs 1. Danach ist eine Dichtung der eingangs genannten Art dadurch gekennzeichnet, dass die äußere Wirkfläche derart ballig ausgeformt ist, dass sie während der relativen Bewegung der Lauffläche ausschließlich über ein Fluidum mit dieser in Wirkverbindung steht.

Erfindungsgemäß ist zunächst erkannt worden, dass ein zuverlässiges Abdichten zweier Räume gegeneinander durch einen Fluidfilm, also eine definierte Undichtheit, erfolgen kann. In einem zweiten Schritt ist sodann erkannt worden, dass die Dichtungswirkung um so besser ist, je geringer die Dicke des Fluidfilms ist. In einem dritten Schritt ist schließlich erkannt worden, dass durch eine ballige Ausgestaltung der Wirkfläche vorteilhaft realisiert ist, dass am Gleitelement eine Art Wasserski-Effekt auftritt, der das Fluid zwischen die Wirkfläche und die Lauffläche zwingt. Hierdurch unterliegt das an der Lauffläche entlang laufende Gleitelement geringer, überwiegend hydrodynamischer Reibung. Insoweit ist ein System realisierbar, welches bei optimaler Schmierung zuverlässig abgedichtet ist. Folglich ist die eingangs genannte Aufgabe gelöst.

In einer konstruktiv besonders günstigen Ausgestaltung könnte die äußere Wirkfläche axiale Randbereiche aufweisen, welche Einführschrägen zum Einströmen des Fluidums definieren. Diese konkrete Ausgestaltung stellt sicher, dass das Fluidum im Sinne eines Wasserski-Effekts zwischen die Wirkfläche und die Lauffläche eingeführt und somit ein Fluidfilm ausgebildet wird.

Die äußere Wirkfläche könnte konvex ausgeformt sein. Die konvexe Ausgestaltung stellt sicher, dass ein sich innerhalb eines Fluids bewegendes Element nur einen geringen Strömungswiderstand erfährt.

Die äußere Wirkfläche könnte im Querschnitt symmetrisch ausgeformt sein. Diese konkrete Ausgestaltung erlaubt, dass ein hin- und herbewegbares Gleitelement in beiden Richtungen gleich viel Fluid zwischen sich und die Lauffläche einzieht.

Ganz in Abhängigkeit von den Medien, welche sich in zwei voneinander getrennten Räumen befinden, könnte die äußere Wirkfläche im Querschnitt asymmetrisch ausgeformt sein. Diese konkrete Ausgestaltung trägt der Tatsache Rechnung, dass Fluide unterschiedlicher Viskosität unterschiedliche Geometrien der Wirkfläche verlangen, um zwischen diese und die Lauffläche definiert eingezogen zu werden. Die Geometrie der Wirkfläche könnte im Hinblick auf ihre Asymmetrie in Abhängigkeit von den Druckverhältnissen in den voneinander getrennten Räumen ausgestaltet sein.

Die Wirkfläche könnte im Querschnitt zumindest teilweise ellipsenförmig ausgebildet sein. Dabei ist insbesondere denkbar, dass die axialen Randbereiche der Wirkfläche in ihrem Querschnitt ellipsenförmig gekrümmt sind. Die Ellipsenform ist in fertigungstechnischer Hinsicht von Relevanz, da sie durch mathematische Formeln in einfacher Weise darstellbar ist. Dies ermöglicht, dass in computergesteuerten Maschinen problemlos die Fertigungskoordinaten für ein ellipsenförmiges Gleüelement eingebbar sind.

Die Wirkfläche könnte im Querschnitt zumindest teilweise parabelförmig ausgebildet sein. Vor diesem Hintergrund ist ebenso denkbar, dass die Wirkfläche zumindest teilweise hyperbelförmig ausgebildet ist. Die genannten geometrischen Ausgestaltungen könnten entweder symmetrisch oder asymmetrisch in einem Gleitelement realisiert sein. Dabei ist denkbar, dass ein axialer Randbereich im Querschnitt hyperbelförmig und der andere parabelförmig ausgebildet ist. Denkbar ist auch, dass eine Kombination der Hyperbelform oder Parabelform mit einer Eilipsenform vorgenommen wird.
Alle genannten Geometrien können durch rechnerunterstützte Geräte gefertigt werden.

Die äußere Wirkfläche könnte mit der Lauffläche einen Anstiegswinkel α definieren. Dieser bestimmt die Steilheit des Verlaufs eines radialen Spaltes zwischen Lauffläche und Gleitelement. Die Steilheit kann in Abhängigkeit von der Viskosität des als Schmiermittel fungierenden Fluids gewählt werden.

Vor diesem Hintergrund ist denkbar, dass der Anstiegswinkel α höchstens 5° beträgt Die Auswahl des Anstiegswinkels α aus diesem Zahlenbereich ist im Hinblick auf die Viskosität aller Hydraulikfluide, insbesondere Hydrauliköle, von Vorteil, da ein mit dieser Steilheit ausgebildeter Radialspalt ein problemloses Eindringen von Fluid sowohl bei schnellen als auch bei langsamen Bewegungen der relativ zueinander bewegten Teile ermöglicht. Der Anstiegswinkel α ist lefiztlich eine Funktion der Viskosität. Insbesondere erlaubt die Auswahl des Winkels α aus dem genannten Bereich, dass auch schnelle und ruckartige Hübe kein Abreißen des Schmierfilms bewirken.

Das Gleitelement könnte eine axiale Breite aufweisen, die geringer als 18 mm ist. Die Wahl der Breite aus diesem Zahlenbereich stellt sicher, dass ein Fluidfilm eine zuverlässige Abdichtung zwischen zwei Räumen gewährleistet und nicht abreißt.

Die Dichtung könnte eine radiale Stärke von höchstens 20 mm aufweisen. Die Auswahl dieser radialen Stärke stellt sicher, dass die Dichtung problemlos in Nuten mit einer Tiefe von etwa 15 bis 18 mm positionierbar und komprimierbar ist. Die Dichtung ist in der Einbausituation auf maximal 75 % ihrer radialen Stärke im ausgebauten Zustand komprimierbar. Hierdurch wird ein optimales Anlageverhalten des Gleitelements an der Lauffläche sichergestellt.

Die äußere Wirkfläche des Gleitelements könnte einen Krümmungsradius aufweisen, der höchstens dem zehnfachen Wert der axialen Breite des Gleitelements, entspricht. Die Wahl des Krümmungsradius aus diesem Bereich stellt die Realisierung einer zufrieden stellenden Dichtheit unter Ausbildung eines permanent vorhandenen Fluidfilms sicher.

Das Verhältnis von radialer Überhöhung zu axialer Breite der Wölbung des Gleitelements könnte höchstens 0,2 betragen. Diese Dimensionierung erlaubt eine besonders deutliche Ausprägung des Wasserski-Effekts, der das Fluid zwischen Gleitelement und Lauffläche zwingt.

Der Durchmesser des Gleitelements könnte höchstens 1 m betragen. Bei der Wahl eines Durchmessers aus diesem Bereich kann die Dichtung in allen gängigen Zylinderanordnungen Verwendung finden. Denkbar ist die Verwendung als Kolbendichtung oder Stangendichtung.

Das Gleitelement könnte aus einem thermoplastischen Werkstoff oder Kunststoff gefertigt sein. Thermoplastische Werkstoffe sind besonders gut verarbeitbar und im Hinblick auf ihr Materialverhalten gut erforscht. Daher eignen sie sich in besonderer Weise zur Fertigung von Spezialdichtungen.

Das Gleitelement könnte aus Polytetrafluorethylen gefertigt sein. Die Verwendung von Polytetrafluorethylen ist vorteilhaft, da dieses Material kommerziell leicht erhältlich ist. Des Weiteren zeichnet sich Polytetrafluorethylen durch eine hohe Abriebfestigkeit aus, so dass eine lange Lebensdauer der Dichtung gewährleistet ist. Schließlich hat Polytetrafluorethylen auf Grund seiner molekularen Struktur gute Reibungseigenschaften, insbesondere im Mischreibungsgebiet.

Das Gleitelement könnte aus Polyurethan gefertigt sein. Polyurethan stellt einen kostengünstigen, verschleißfesten Werkstoff dar, welcher eine besonders einfache Formgebung des Gleitelements erlaubt.

Das Anpresselement könnte aus Gummi gefertigt sein. Gummi zeichnet sich auf Grund seiner elastischen Eigenschaften als Werkstoff für das Anpresselement aus, da dieses problemlos deformierbar sein muss. Die Deformierung wird durch die Kraftbeaufschlagung durch das Gleitelement bewirkt. Bei einer Verwendung von Gummi ist sichergestellt, dass sich das Anpresselement problemlos in Nuten oder andere Hohlräume einschmiegt und diese ausfüllt. Darüber hinaus ist Gummi weitgehend chemisch resistent gegenüber allen gängigen Medien.

Das Anpresselement könnte ringförmig ausgebildet sein. Dabei ist insbesondere denkbar, dass das Anpresselement als O-Ring ausgebildet ist. Die O-ringförmige Ausgestaltung lässt eine besonders problemlose Fertigung des Anpresselements zu, da O-Ringe kommerziell leicht erhältlich sind.

Das Anpresselement könnte im Querschnitt rechteckförmig ausgebildet sein. Diese Ausgestaltung ist insbesondere von Vorteil, wenn das Anpresselement in rechteckförmige Nuten eingefügt werden muss. Die rechteckförmige Ausgestaltung stellt insoweit sicher, dass innerhalb der rechteckförmigen Nut nur Hohlräume geringen Volumens verbleiben. Denkbar ist sogar, dass das rechteckförmige Anpresselement die Nut unter Kraftbeaufschlagung völlig ausfüllt, so dass ein axiales Verrutschen der Dichtung nahezu ausgeschlossen ist. Das maximale Volumen der Dichtung muss jedoch in den Einbauraum passen, daher muss das Volumen der Dichtung stets kleiner als das des Einbauraums sein. Die rechteckige Geometrie erlaubt auch eine vollflächige Anlage des Anpresselements an der inneren Wirkfläche des Gleitelements. Hierdurch ist gewährleistet, dass das Gleitelement mit einer homogenen Flächenpressung gegen die Lauffläche gedrückt wird.

Das Anpresselement könnte im Querschnitt trapezförmig ausgestaltet sein. Dabei ist denkbar, dass das Anpresselement als Trapezring ausgestaltet ist.
Ein Element dieser Geometrie wird bei Kraftbeaufschlagung aufgrund günstiger Prossspannungsverteilung derart deformiert, dass die Seitenschenkel des Trapezes nicht über die Ausdehnung der Grundseite des Trapezes hinaus ragen. Ein solches Anpresselement lässt sich überdies nur unter sehr großer Krafteinwirkung merklich deformieren. Insoweit kann mit einem Anpresselement dieser Geometrie gewährleistet werden, dass zwischen dem Anpresselement und den Wänden des Hohlraums, in welchem das Anpresselement aufgenommen ist, stets ein Spalt verbleibt. Eine Beabstandung des Anpresselements gegenüber den Wänden des Hohlraums, in welchem das Anpresselement positioniert ist, kann den Abrieb des Anpresselements verhindern.

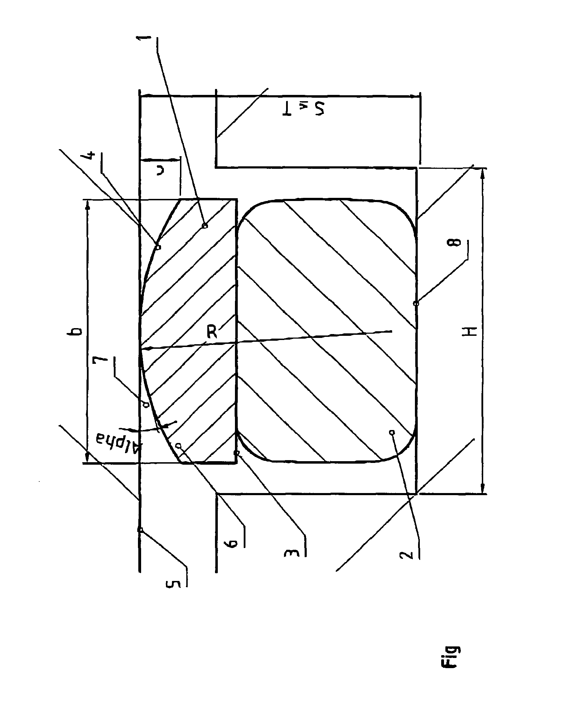

Es gibt nun verschiedene Möglichkeiten, die Lehre der vorliegenden Erfindung auf vorteithafte Weise auszugestalten und weiter zu bilden. Dazu ist einerseits auf die dem Patentanspruch 1 nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigt die einzige
- Fig.: eine erfindungsgemäße Dichtung in eingebautem Zustand in einer schematischen Schnittansicht.

### Ausführung der Erfindung

Die einzige Fig. zeigt in einer schematischen Schnittansicht eine Dichtung, welche in einer Zylinderanordnung eingebaut ist. Die Dichtung umfasst ein Gleitelement 1 und ein Anpresselement 2, wobei das Gleitelement 1 eine innere Wirkfläche 3 und eine äußere Wirkfläche 4 aufweist. Das Gleitelement 1 umgibt das Anpresselement 2 umfänglich, wobei das Anpresselement 2 an die innere Wirkfläche 3 des Gleitelements 1 kraftbeaufschlagt anpressbar ist. Die äußere Wirkfläche 4 des Gleitelements 1 ist einer relativ zur Dichtung beweglichen Lauffläche 5 zugeordnet. Die äußere Wirkfläche 4 ist derart ballig ausgeformt, dass sie während der relativen Bewegungen der Lauffläche 5 ausschließlich über ein Fluidum mit dieser in Wirkverbindung steht.

Die äußere Wirkfläche 4 weist axiale Randbereiche 6 auf, welche Einführschrägen 7 zum Einströmen des Fluidums definieren. Die äußere Wirkfläche 4 ist konvex symmetrisch ausgeformt.

Die äußere Wirkfläche 4 ist derart symmetrisch konvex ausgeformt, dass bei der relativen Bewegung der Lauffläche 5 zur Dichtung ein Wasserski-Effekt auftritt, welcher das Fluidum zwischen die Lauffläche 5 und die äußere Wirkfläche 4 zwingt.

Das Anpresselement 2 ist O-ringförmig ausgebildet und besteht aus einem elastischen Werkstoff. Das Anpresselement ist aufgrund der auf dieses ausgeübten Kraft abgeplattet.

Die nachfolgend aufgeführten konkreten Zahlenbereiche und geometrischen Abhängigkeiten wurden ausgewählt, da diese die Geometrie von Dichtungen definieren, die überraschenderweise überdurchschnittlich gute Reibungseigenschaften zeigen und den Wasserskieffekt besonders gut realisieren.

Die äußere Wirkfläche 4 definiert im Bereich ihrer größten radialen Ausdehnung mit der Lauffläche 5 einen Anstiegswinkel α. Der Anstiegswinkel α beträgt höchstens 5°.

Die axiale Breite b einer Dichtung gemäß Fig. ist abhängig von den Dimensionen der Nut und der Beabstandung der Lauffläche 5 vom Nutgrund 8 auszuwählen. Der Abstand S der Lauffläche 5 vom Nutgrund 8 wird sinnvollerweise für Durchmesser der Dichtung von 5 bis 100 mm aus dem Bereich 3 bis 6 mm gewählt. Für Durchmesser aus dem Bereich 50 bis 400 mm wird der Abstand S aus dem Bereich 5 bis 15 mm und für Durchmesser größer 400 mm wird ein Abstand S von 15 mm gewählt. Die Weite H der Nut sollte für eine sinnvolle Abdichtung der Zylinderanordnung einen Wert aufweisen, der etwa dem 0,7fachen bis 1,2fachen des Abstands S entspricht. Die axiale Breite b ist kleiner als die Weite H zu wählen. Die axiale Breite b ist kleiner als 18 mm.

Die radiale Stärke T einer solchen Dichtung ist größer oder gleich dem Abstand S zu wählen, um eine sinnvolle Abdichtung zu erzielen. Die radiale Stärke T sollte einen Wert aufweisen, der dem 1,02fachen bis 1,3fachen des Abstands S entspricht Die Stärke T beträgt höchstens 20 mm. Die Dichtung ist in ihrer Gesamtheit so konzipiert, dass ihre radiale Stärke auf 75% reduzierbar ist. Die Reduzierung tritt dann auf, wenn die Dichtung in dem nutförmigen Einbauraum der Zylinderanordnung eingepresst wird.

Die äußere Wirkfläche 4 des Gleitelements 1 weist einen Krümmungsradius R auf, der höchstens dem zehnfachen Wert der axialen Breite b entspricht. Sinnvollerweise ist der Krümmungsradius aus einem Bereich wählbar, der sich vom 0.5fachen bis 10fachen Wert der axialen Breite b erstreckt.

Das Gleitelement 1 weist eine radiale Überhöhung c auf, die sich vom Beginn der Einführschrägen 7 bis zur höchsten radialen Erhebung des Gleitelements 1 erstreckt. Das Verhältnis von radialer Überhöhung c zu axialer Breite b ist sinnvollerweise aus einem Bereich wählbar, der sich von 0,05 bis 0,2 erstreckt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen. Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Dichtung mit einem Gleitelement (1) und einem Anpresselement (2), wobei das Gleitelement (1) eine innere (3) und eine äußere Wirkfläche (4) aufweist, wobei das Gleitelement (1) das Anpresselement (2) umfänglich umgibt, wobei das Anpresselement (2) an die innere Wirkfläche (3) des Gleitelements (1) kraftbeaufschlagt anpressbar ist und wobei die äußere Wirkfläche (4) des Gleitelements (1) einer relativ zur Dichtung beweglichen Lauffläche (5) zuordenbar ist,
**dadurch gekennzeichnet, dass** die äußere Wirkfläche (4) derart ballig ausgeformt ist, dass sie während der relativen Bewegung der Lauffläche (5) ausschließlich über ein Fluidum mit dieser in Wirkverbindung steht.

2. Dichtung nach Anspruch 1, **dadurch gekennzeichnet, dass** die äußere Wirkfläche (4) axiale Randbereiche (6) aufweist, welche Einführschrägen (7) zum Einströmen des Fluidums definieren.

3. Dichtung nach Anspruch 1 oder 2, **dadurch gekennzeichnet, dass** die äußere Wirkfläche (4) konvex ausgeformt ist.

4. Dichtung nach Anspruch 2 oder 3, **dadurch gekennzeichnet, dass** die äußere Wirkfläche (4) im Querschnitt symmetrisch ausgeformt ist.

5. Dichtung nach Anspruch 2 oder 3, **dadurch gekennzeichnet, dass** die äußere Wirkfläche (4) im Querschnitt asymmetrisch ausgeformt ist.

6. Dichtung nach einem der Ansprüche 2 bis 5, **dadurch gekennzeichnet, dass** die Wirkfläche (4) im Querschnitt zumindest teilweise ellipsenförmig ausgebildet ist.

7. Dichtung nach einem der Ansprüche 2 bis 6, **dadurch gekennzeichnet, dass** die Wirkfläche (4) im Querschnitt zumindest teilweise parabelförmig ausgebildet ist.

8. Dichtung nach einem der Ansprüche 2 bis 7, **dadurch gekennzeichnet, dass** die Wirkfläche (4) im Querschnitt zumindest teilweise hyperbelförmig ausgebildet ist.

9. Dichtung nach einem der Ansprüche 1 bis 8, **dadurch gekennzeichnet, dass** die äußere Wirkfläche (4) im Bereich Ihrer größten radialen Ausdehnung mit einer zum Radius orthogonalen Tangente einen Anstiegswinkel α definiert.

10. Dichtung nach Anspruch 9, **dadurch gekennzeichnet, dass** der Anstiegswinkel α höchstens 5° beträgt.

11. Dichtung nach einem der Ansprüche 1 bis 10, **dadurch gekennzeichnet, dass** das Gleitelement (1) eine axiale Breite b aufweist, die geringer als 18 mm ist.

12. Dichtung nach einem der Ansprüche 1 bis 11, **gekennzeichnet durch** eine Stärke T in radialer Richtung von höchstens 20 mm.

13. Dichtung nach Anspruch 11 oder 12, **dadurch gekennzeichnet, dass** die äußere Wirkfläche (4) des Gleitelements (1) einen Krümmungsradius R aufweist, der höchstens dem zehnfachen Wert der axialen Breite b entspricht.

14. Dichtung nach einem der Ansprüche 2 bis 13, **dadurch gekennzeichnet, dass** das Verhältnis von radialer Überhöhung c des Gleitelements (1) zu axialer Breite b höchstens 0.2 beträgt.

15. Dichtung nach einem der Ansprüche 1 bis 14, **gekennzeichnet durch** einen Durchmesser von höchstens 1 m.

16. Dichtung nach einem der Ansprüche 1 bis 15, **dadurch gekennzeichnet, dass** das Gleitelement (1) aus einem thermoplastischen Werkstoff oder Kunststoff gefertigt ist.

17. Dichtung nach einem der Ansprüche 1 bis 16, **dadurch gekennzeichnet, dass** das Gleitelement (1) aus Polytetrafluorethylen gefertigt ist.

18. Dichtung nach einem der Ansprüche 1 bis 16, **dadurch gekennzeichnet, dass** das Gleitelement (1) aus Polyurethan gefertigt ist.

19. Dichtung nach einem der Ansprüche 1 bis 18, **dadurch gekennzeichnet, dass** das Anpresselement (2) aus Gummi gefertigt ist.

20. Dichtung nach einem der Ansprüche 1 bis 19, **dadurch gekennzeichnet, dass** das Anpresselement (2) ringförmig ausgebildet ist.

21. Dichtung nach Anspruch 20, **dadurch gekennzeichnet, dass** das Anpresselement (2) als O-Ring ausgebildet ist.

22. Dichtung nach einem der Ansprüche 1 bis 20, **dadurch gekennzeichnet, dass** das Anpresselement (2) im Querschnitt rechteckförmig ausgebildet ist.

23. Dichtung nach einem der Ansprüche 1 bis 20, **dadurch gekennzeichnet, dass** das Anpresselement (2) im Querschnitt trapezförmig ausgebildet ist.
